# EUROPEAN PATENT SPECIFICATION

(11) **EP 1 513 709 B1**
(45) Date of publication and mention of the grant of the patent: **18.06.2008**
(21) Application number: 03757227.8
(22) Date of filing: 04.06.2003
(51) Int. Cl.: B60R 22/195

(54) **IMPROVEMENTS IN OR RELATING TO A PRE-TENSIONER**
VERBESSERUNGEN EINES VORSPANNERS ODER DIESEN BETREFFEND
AMELIORATIONS APPORTEES A UN PRE-TENDEUR

(30) Priority: 06.06.2002 GB 0212988; 27.09.2002 GB 0222525
(43) Date of publication of application: 16.03.2005
(73) Proprietor: AUTOLIV DEVELOPMENT AKTIEBOLAG, 447 83 Vargarda (SE)
(72) Inventor: ARNAUD, Denis, F-78440 Lainville-en-Vexin (FR); HELAS, Matthieu, F-76000 Rouen (FR)
(74) Representative: Parry, Simon James
(86) International application number: PCT/SE2003/000913
(87) International publication number: WO 2003/104050

(56) References cited:
- EP-A1- 0 808 752
- EP-A2- 0 625 450
- WO-A-98/34817
- GB-A- 1 407 954

## Description

**THE PRESENT INVENTION** relates to a pre-tensioner, and more particularly relates to a pre-tensioner adapted to apply tension to part of a safety-belt provided within a motor vehicle.

It has been proposed previously to provide a pre-tensioner to apply tension to a safety-belt provided within a motor vehicle. Such a pre-tensioner is actuated in response to a signal from a crash sensor indicating that an accident is occurring. The function of the pre-tensioner is to apply tension to part of the safety-belt arrangement so that any slack initially present in the safety-belt before an accident is taken up very quickly, in the even of an accident, so that the safety-belt is brought to a condition in which it is relatively tightly engaging the occupant of the seat. Thus, as soon as the occupant of the seat begins to move forwardly, relative to the seat, that forward movement is restrained by the safety-belt. Thus the risk of the seat occupant impacting with a fixed part of the vehicle, such as a steering wheel or dashboard, is minimised.

A typical prior proposed pre-tensioner comprises a piston-and-cylinder arrangement, the piston being connected, for example by a wire or cable, to part of a safety-belt. A gas generator is provided to inject gas into the cylinder, when an accident arises, to move the piston so that tension is applied to the safety-belt. The wire or cable connecting the piston to the safety-belt typically passes through an end wall of the cylinder.

GB-A-14079 54 discloses an arrangement of this generic type.

It has been proposed, in order to avoid gas leakage from the cylinder, to provide a seal which seals against the wire or cable where it passes through the end wall of the cylinder. EP 0 654 50 A2 discloses a prior proposed pre-tensioner arrangement in which a frusto conical seal is provided around a cable in the region where the cable exits the cylinder. The frusto-conical seal is seated within a similarly shaped frusto-conical recess provided in the housing of the pre-tensioner, such that the narrow end of the seal is directed towards the piston. The seal is inserted into the recess and is held in place by a cover or through a setting operation. The characteristics of the sealing effect provided by the seal of this arrangement are predetermined when the arrangement is assembled.

The present invention seeks to provide a pre-tensioner having improved sealing performance.

According to the present invention, there is provided a pre-tensioner for a safety-belt arrangement, the pre-tensioner comprising a cylinder defining a bore and an arrangement to supply gas to the bore in the event that an accident should occur; the cylinder containing a piston moveable within the bore in response to the supply of gas to the bore, the piston being connected to an elongate element which extends from the cylinder through an outlet passage for connection to part of a safety-belt arrangement, there being a seal associated with the elongate element, the seal comprising a substantially frusto-conical element of resilient or yieldable material and defining a passage through which the elongate element passes; the frusto-conical extension being received within a corresponding frusto-conical extension of the bore of the cylinder, the frusto-conical extension of the bore narrowing towards the outlet passage, the seal being movable within the frusto-conical extension of the bore towards the outlet passage in response to the application of pressure to the seal when gas is introduced into the bore of the cylinder,
wherein, between the frusto-conical extension of the bore and the outlet passage, a cylindrical chamber is provided, the cylindrical chamber having a greater diameter than that of the outer passage.

Advantageously, the passage through the seal has, at the relatively narrow end of the frusto-conical seal, a bell mouth.

In order that the invention may be more readily understood, and so that further features thereof may be appreciated, an embodiment of the invention will now be described, by way of example, with reference to the accompanying drawings in which:
FIGURE 1 is a diagrammatic sectional view showing part of a pre-tensioner in accordance with the invention, before deployment;
FIGURE 2 is an enlarged view of part of the embodiment of Figure 1, during deployment of the pre-tensioner;
FIGURE 3 is a view corresponding to Figure 2 provided for purposes of explanation;
FIGURE 4 is a view corresponding to Figure 2 showing a subsequent stage in the deployment of the pre-tensioner, and
FIGURE 5 is a sectional view of a modified seal.

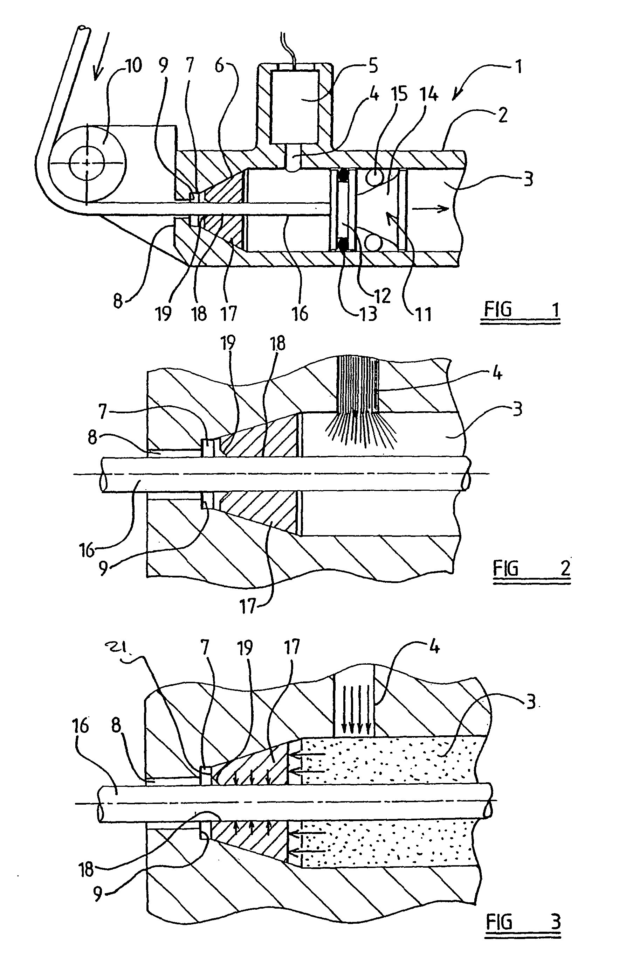

Referring initially to Figure 1 of the accompanying drawings, a pre-tensioner 1 comprises a cylinder 2 defining a cylindrical bore 3. In the region of one end of the cylinder 2, the bore 3 communicates, by a means of a laterally extending passage 4, with a chamber 5 adapted to receive a gas generator. The gas generator is arranged to be actuated upon receipt of a signal from a crash sensor.

The end of the bore 3 adjacent the chamber 5 is formed into a converging frusto-conical extension 6, where the diameter of the bore 3 reduces substantially evenly over the length of the extension 6. The frusto-conical extension 6 of the bore 3 terminates with a relatively short cylindrical chamber 7 of uniform cross-section. The cylindrical chamber 7 of uniform cross-section terminates with an outlet passage 8 of circular cross-section. However, the diameter of the cylindrical chamber 7 is slightly greater than the diameter of the outlet passage 8 such that a small end wall 9 is defined at the left-most end of the cylindrical chamber 7.

Rotatably mounted on the end of the cylinder 2 adjacent the outlet passage 8, is a pulley-wheel 10. However, in other embodiments, it is envisaged that the rotatable pulley-wheel 10 could be replaced with a non-rotatable guide.

Within the bore 3, there is provided a piston 11 of generally conventional design. The piston 11 defines a radially outwardly extending flange 12 provided with a peripheral groove which contains a resilient sealing material 13 to provide a gas-tight sliding fit between the piston 11 and the wall of the bore 3. The piston includes a tapering body portion 14, the narrow end of which is connected to the flange 12. Surrounding the tapering body portion 14 of the piston, there is provided a plurality of balls 15, which (as will become apparent hereinafter) act to prevent subsequent movement of the piston 11 to the left as illustrated, after actuation of the pre-tensioner.

An elongate element, preferably in the form of a wire or cable 16 extends from the piston 12 and passes axially along the bore 3, through the frusto-conical extension 6 of the bore 3, through the cylindrical chamber 7 and out of the bore 3 via the outlet port 8. The wire or cable 16 then passes around the pulley 10 to be connected to part of a safety-belt arrangement.

Seated within the frusto-conical extension 6 of the bore is a correspondingly shaped frusto-conical seal 17, the seal 17 being formed of a resilient or yieldable material. The seal 17 has a frusto-conical exterior surface which matingly engages with the interior wall of the frusto-conical extension 6 of the bore 3. The seal 17 is provided with an axial passage 18 through which the wire or cable 16 passes. The axial passage 18 through the seal 17 has an initial diameter (when the seal 17 is in a relaxed, uncompressed condition) which is substantially equal to, or only slightly smaller than the diameter of the wire or cable 16, so as to ensure a good seal thereagainst.

At its end remote from the piston 11 and located at the narrowest end of the seal 17, the passage 18 through the seal 17 may be slightly divergent so as to have a chamfered "bell mouth" 19 (illustrated most clearly in Figure 2).

In the event that an accident should arise, a signal from a crash sensor is passed to the gas generator within the chamber 5 to actuate the gas generator and cause gas to flow through the passage 4 into the region of the bore 3 between the piston 11 and the seal 17, as shown in Figure 2. The piston 11 is thus urged along the bore 3 towards the right by the very high pressure of the gas, as shown in Figure 1, drawing the wire or cable 16 into the cylinder 2 and thus applying tension to part of the safety-belt arrangement. When the piston 11 has stopped moving in this way towards the right as illustrated, should a force be applied to the wire or cable 16, moving the piston 11 slightly back to the left, the balls 15 will ride up the tapering body portion 14 of the piston 11 and become jammed between the tapering body portion 14 of the piston and the side-wall of the cylinder 2, thus preventing subsequent movement of the piston 11 towards the left.

As gas is injected into the part of the bore 3 of the cylinder 2 between the piston 11 and the seal 17, the pressure of gas applied to the seal 17 will rise. Thus a situation will exist, as shown in Figure 3, where the wire or cable 16 may be moving towards the right as shown, whilst the gas pressure P is applied in an opposite sense to the widest end face of the frusto-conical seal 17. The seal 16 is thus urged towards the left, as shown in Figure 3 under the action of gas pressure.

Due to the frusto-conical configuration of the seal 17 and the frusto-conical extension 6 of the bore 3 within which it is seated, the seal 17 becomes radially compressed as it is urged towards the narrow end of the frusto-conical extension 6 of the bore 3. The effect of this radial compression of the seal 17 is that the diameter of the passage 18 through the seal 17 becomes reduced so that the seal 17 firmly grips the wire or cable 16, thus minimising the risk of gas leakage from the cylinder 2.

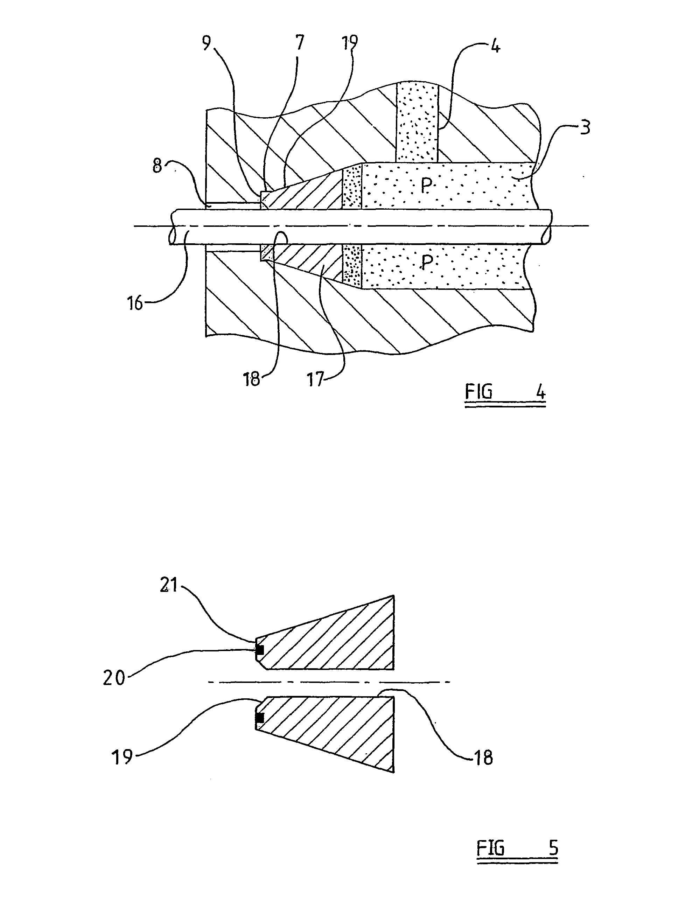

As the pressure continues to rise, the seal 17 is urged further into the frusto-conical extension 6 of the bore 3, thereby compressing the seal 17 further and tightening its sealing engagement against the wire or cable 16. Eventually, the narrowest end of the seal 17 is driven into the cylindrical chamber 7 adjacent the outlet passage 8, and abuts the end wall 9 of the cylindrical chamber 7 as shown in Figure 4. This serves as a stop against further movement of the narrowest end of the seal 17 along the conical extension of the bore 3, and minimises the risk of part of the seal 17 being driven into the outlet passage 8. If part of the seal 17 was to be driven into the outlet passage 8, there would be a risk that the material of the seal 17 would become so firmly engaged with the wire or cable 16 that, as the wire or cable 16 was moving towards the right with the piston 11, parts of the seal 17 would be entrained with the wire or cable 16, and the seal 17 would be torn apart.

The chamfered "bell mouth" 19 provided at the end of the passage 18 extending through the seal 17, ensures that even when the seal 17 is highly radially compressed in the manner explained above, the end face 21 of the seal 17 is always spaced slightly away from the wire or cable 16. This spacing of the narrowest end face 21 of the seal 17 from the wire or cable 16 minimises any tendency for the end face 21 to be drawn into the passage 18 through the seal 17 by movement of the wire or cable 16 to the right as illustrated, hence distorting the seal17 or causing it to be torn apart.

In order to further minimise the risk of the seal 17 entering the outlet passage 8, the narrowest end of the seal 17 that is to be driven into the cylindrical chamber 7 may be provided with a reinforcing element in the form of a ring of relatively hard material 20, dimensioned to abut the end wall 9 of the cylindrical chamber 7, as shown in Figure 5.

In the present specification "comprises" means "includes or consists of" and "comprising" means "including or consisting of".

## Claims

1. A pre-tensioner (1) for a safety-belt arrangement, the pre-tensioner comprising a cylinder (2) defining a bore (3) and an arrangement to supply gas to the bore in the event that an accident should occur; the cylinder (2) containing a piston (11) moveable within the bore in response to the supply of gas to the bore, the piston being connected to an elongate element (16) which extends from the cylinder (2) through an outlet passage (8) for connection to part of a safety-belt arrangement, there being a seal associated with the elongate element, the seal comprising a substantially frusto-conical element (17) of resilient or yieldable material and defining passage (18) through which the elongate element (16) passes; the frusto-conical element being received within a corresponding frusto-conical extension (6) of the bore (3) of the cylinder (2), the frusto- conical extension (6) of the bore narrowing towards the outlet passage (8) the seal (17) being movable within the frusto-conical extension (6) of the bore towards the outlet passage (8) in response to the application of pressure to the seal (17) when gas is introduced into the bore (3) of the cylinder, **characterised in that,**
between the frustoconical extension (6) of the bore and the outlet passage (8) a cylindrical chamber (7) is provided, the cylindrical chamber (7) having a greater diameter than that of the outlet passage (8)

2. A pre-tensione according to Claim 1 wherein the passage (18) through the seal (17) has, at the relatively narrow end of the frusto conical seal (17), a bell mouth (19)

## Patentansprüche

1. Vorspanneinrichtung (1) für eine Sicherheitsgurtanordnung, wobei die Vorspanneinrichtung einen eine Bohrung (3) definierenden Zylinder (2) und eine Anordnung zum Zuführen von Gas für den Fall, dass ein Unfall eintreten sollte, umfasst, wobei der Zylinder (2) einen Kolben (11) enthält, der in der Bohrung in Reaktion auf die Gaszufuhr in die Bohrung bewegbar ist, wobei der Kolben mit einem länglichen Element (16) verbunden ist, das sich von dem Zylinder (2) durch einen Auslassdurchgang (8) zur Verbindung mit einem Teil der Sicherheitsgurtanordnung erstreckt, wobei dem länglichen Element eine Dichtung zugeordnet ist und die Dichtung ein im Wesentlichen kegelstumpfförmiges Element (17) aus elastischem oder biegsamem Material umfasst und einen Durchgang (18), durch den das längliche Element (16) läuft, definiert, wobei das kegelstumpfförmige Element in einer entsprechenden kegelstumpfförmigen Erweiterung (6) der Bohrung (3) des Zylinders (2) aufgenommen ist, wobei sich die kegelstumpfförmige Erweiterung (6) der Bohrung zum Auslassdurchgang (8) hin verengt, wobei die Dichtung (17) in Reaktion auf eine Druckeinwirkung auf die Dichtung (17) bei Zuführung von Gas in die Bohrung (3) des Zylinders in der stumpfkegelförmigen Erweiterung (6) der Bohrung in Richtung des Auslassdurchganges (8) bewegbar ist, **dadurch gekennzeichnet, dass** zwischen der kegelstumpfförmigen Erweiterung (6) der Bohrung und dem Auslassdurchgang (8) eine zylindrische Kammer (7) bereitgestellt ist, wobei die zylindrische Kammer (7) einen größeren Durchmesser als der Auslassdurchgang (8) aufweist.

2. Vorspanneinrichtung (1) nach Anspruch 1, bei welcher der Durchgang (18) durch die Dichtung (17) an dem relativ engen Ende der kegelstumpfförmigen Dichtung (17) eine trichterförmige Öffnung (19) aufweist.

## Revendications

1. Prétensionneur (1) destiné à un système de ceinture de sécurité, le prétensionnéur comprenant un cylindre (2) définissant un alésage (3) et un système pour acheminer un gaz jusqu'à l'alésage dans le cas où un accident surviendrait ; le cylindre (2) contenant un piston (11) pouvant se déplacer à l'intérieur de l'alésage en réponse à l'acheminement du gaz jusqu'à l'alésage, le piston étant relié à un élément allongé (16) qui s'étend depuis le cylindre (2) à travers un passage de sortie (8) pour une liaison avec une partie d'un système de ceinture de sécurité, se trouvant à cet endroit un joint associé à l'élément allongé, le joint comprenant un élément sensiblement tronconique (17) fait à partir d'un matériau élastique ou pouvant être déformé et définissant un passage (18) à travers lequel l'élément allongé (16) passe ; l'élément tronconique étant reçu à l'intérieur d'une extension tronconique correspondante (6) de l'alésage (3) du cylindre (2), l'extension tronconique (6) de l'alésage devenant plus étroite vers le passage de sortie (8), le joint (7) pouvant être déplacé à l'intérieur de l'extension tronconique (6) de l'alésage vers le passage de sortie (8) en réponse à l'application d'une pression sur le joint (17) lorsque le gaz est introduit dans l'alésage (3) du cylindre, **caractérisé en ce que**, entre l'extension tronconique (6) de l'alésage et le passage de sortie (8), une chambre cylindrique (7) est fournie, la chambre cylindrique (7) ayant un diamètre supérieur à celui du passage de sortie (8).

2. Prétensionneur selon la revendication 1, dans lequel le passage (18) à travers le joint (17) possède, au niveau de l'extrémité relativement étroite du joint tronconique (17), un orifice évasé (19).
